# EUROPÄISCHE PATENTANMELDUNG

(11) **EP 1 708 020 A2**
(43) Veröffentlichungstag der Anmeldung: **04.10.2006**
(21) Anmeldenummer: 06001923.9
(22) Anmeldetag: 31.01.2006
(51) Int. Cl.: G03B 17/56

(54) **Einrichtung zum Zuführen eines Objektivs zu einer Kamera sowie Vorrichtung zur Aufnahme von Bildern**

(30) Priorität: 23.02.2005 DE 102005008568
(71) Anmelder: Carl Zeiss AG, 73447 Oberkochen (DE)
(72) Erfinder: Weber, Uwe, 73432 Aalen (DE)

(57) **Zusammenfassung**

Die Erfindung betrifft eine Einrichtung zum Zuführen eines Objektivs (4) zu einer Kamera (1) mit einem Basiselement (3) und einem Brückenelement (6) wobei das Objektiv (4) mittels des Brückenelements (6) am Basiselement (3) in Richtung der Kamera (1) hin und her bewegbar ist dadurch gekennzeichnet, dass das ein Stützelement (7) zwischen Basiselement (3) und Objektiv (4) angeordnet ist. Die Erfindung betrifft zudem eine Vorrichtung zur Aufnahme von Bildern mit einer Kamera (1) und einem Objektiv (4), dadurch gekennzeichnet, dass die Vorrichtung eine Einrichtung nach einem der vorangegangenen Ansprüche umfasst.

## Beschreibung

Die Erfindung betrifft eine Einrichtung zum Zuführen eines Objektivs zu einer Kamera mit einem Basiselement und einem Brückenelement, wobei das Objektiv mittels des Brückenelements am Basiselement in Richtung der Kamera hin und her bewegbar ist.

Die Erfindung betrifft zudem eine Vorrichtung- zur Aufnahme von Bildern mit einer Kamera und einem Objektiv.

Es ist allgemein bekannt, dass kleine und leichte Objektive bei Filmkameras durch das Bajonett gehalten werden. Große und schwere Objektive sollten unterstützt werden, damit weder die Kamera noch das Objektiv durch das auftretende Moment beschädigt werden. Ein Abbrechen des Objektivs von der Kamera ist hier unbedingt zu vermeiden.

Bekannt ist es unter einer Kamera zwei Stangen anzuordnen an denen verschiedenes Zubehör, z. B. Antriebsmotoren, Kompendien etc. befestigt werden können. An diesen beiden Stangen kann auch ein Brückenelement befestigt werden, auf dem dann das Objektiv abgestützt ist. Dieses Brückenelement ist unter dem Schwerpunkt des Objektivs angebracht. Nachteilig hieran ist, dass das Objektiv bereits bei kleinsten Schwerpunktsverlagerungen zum Kippen neigt, wobei Objektiv und Teile der Kamera beschädigt werden können. Schlimmstenfalls fällt das Objektiv von der Stange herunter und zerbricht. Auch ist kann es problematisch sein, an beengten Plätzen oder in ungewöhnlichen Lagen das Objektiv anzusetzen.

Es ist daher die Aufgabe der Erfindung eine Einrichtung zum Zuführen eines Objektivs zu einer Kamera zu schaffen, mit der eine sichere Lagerung des Objektivs erreicht werden kann. Eine weitere Aufgabe besteht darin, eine Vorrichtung, zur Aufnahme von Bildern zu schaffen, bei der sicher Kamera und Objektiv einander zugeführt werden können.

Gelöst wird die Aufgabe durch die Merkmale des Anspruchs 1 sowie des Anspruchs 17. Bei der erfindungsgemäßen Einrichtung zum Zuführen eines Objektivs zu einer Kamera wird ein Stützelement zwischen Basiselement und Objektiv angeordnet. Die erfindungsgemäße Vorrichtung zur Aufnahme von Bildern weist eine erfindungsgemäße Einrichtung zum Zuführen des Objektivs zu einer Kamera auf. Durch die Erfindung wird das Objektiv sicher gelagert. Eine gute Bildgüte kann erlangt werden.

Vorteilhafte Ausgestaltungen der Erfindungen befinden sich in den Unteransprüchen.

In einer bevorzugten Ausführungsform ist das Basiselement mit Verbindungsmitteln, insbesondere mit einem für Basiselement und Kamera gemeinsamen Stativ, oder direkt mit der Kamera verbunden. Damit ist eine kompakte, stabile Ausführung gewährleistet.

Weiterhin kann das Basiselement zwei Stangen oder zumindest eine Schiene umfassen. Bevorzugt werden Stangen oder Schienen aus Metall öder Karbon verwendet mit einer hohen Tragkraft, z.B. bis zu 30 kg..

Weiterhin können Brückenelement und Basiselement komplementär zueinander ausgebildet sein, z.B. kann das Basiselement mit zwei oder mehr Stangen ausgebildet sein und das Brückenelement entsprechende Nuten aufweisen. Auch kann eine einzelne Stange als Basiselement ausreichend sein.

Das Brückenelement kann bevorzugt lösbar am Objektiv befestigbar sein, z.B. mittels Schraubverbinden. Aber auch ein einfaches Aufsetzen des Objektivs ist vorstellbar. Hierzu weist das Brückenelement bevorzugt eine dem Objektiv angepasste Aussparung auf.

Auch das Stützelement kann lösbar am Objektiv befestigbar sein. Vorstellbar ist beispielsweise eine Klemmverbindung.

Zudem kann das Stützelement verschiebbar am Basiselement gelagert sein.

Weiterhin kann das Objektiv mit der Kamera über einen Verschluss, insbesondere einen Bajonettverschluss verbindbar sein. Hier können handelsübliche Bajonettverschlüsse Verwendung finden.

Auch kann der Schwerpunkt des Objektivs zwischen Brückenelement und Stützelement liegen. Damit ist eine sichere Auflage gewährleistet.

In einer bevorzugten Ausführungsform kann beim Aufliegen des von der Kamera gelösten Objektivs auf Brückenelement und Stützelement die optische Achse des Objektivs um maximal ± 10°, bevorzugt maximal ± 5°, von der optischen Achse der Kamera abweichten.

Dabei kann das Objektiv zur Kamera hin geneigt sein.

Auch kann das Objektiv am Brückenelement um maximal ± 10°, bevorzugt ± 5°, verdrehbar und/oder verkippbar angeordnet sein.

Weiterhin kann das Stützelement derart ausgebildet sein, das es nach Verbindung von Kamera und Objektiv im mit der Kamera verbundenen Zustand das Basiselement nicht berührt.

Schließlich kann das Brückenelement und/oder das Stützelement in eine Richtung senkrecht zu einer Längserstreckung des Basiselements relativ zu diesem Basiselement verlagerbar sein, insbesondere in zwei zueinander senkrechten Richtungen. Dabei kann die Verlagerung maximal 5cm, bevorzugt maximal 2cm betragen.

Durch diese vorgestellten Bewegungsfreiheiten kann das Objektiv einfach an der Kamera befestigt werden ohne das es zu Verhakungen kommt.

Bei einer erfindungsgemäßen Ausführungsform der Vorrichtung kann die Kamera mit Wechselobjektiven verbindbar ausgebildet sein. Brücken- und Stützelement können zur sicheren Aufnahme verschiedenster Objektive ausgebildet sein.

Ein Ausführungsbeispiel der erfindungsgemäßen Einrichtung soll hier an einer Figur erläutert werden, es zeigt:

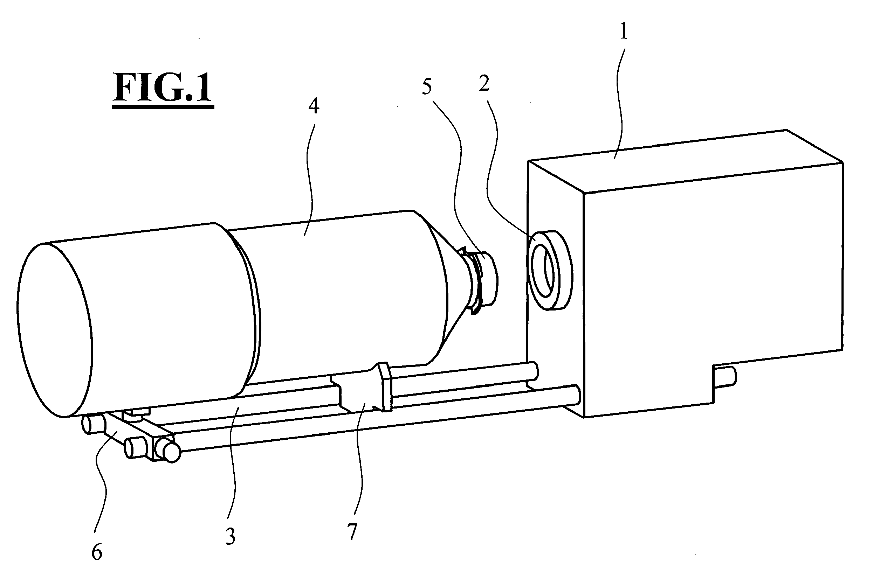

- Fig. 1: Vorrichtung zur Aufnahme von Bildern mit Kamera und Objektiv und erfindungsgemäßer Einrichtung.

Figur 1 zeigt eine Kamera 1 mit einem Kamerabajonett 2 und einem Basiselement 3 mit zwei Stangen. Zudem ist ein Objektiv 4 mit einem Objektivbajonett 5 zu sehen. Das Objektiv ist über ein Brückenelement 6 mit den Stangen 3 verbunden und steht zusätzlich mit dem am Objektiv befestigten Stützelement 7 auf den Stangen 3. Da der Schwerpunkt sich zwischen dem Brückenelement 6 und Stützelement 7 befindet, steht das Objektiv stabil auf dem Basiselement 3, ohne zu verkippen. Um das Objektiv 4 an die Kamera 1 anzusetzen muss es allein entlang der beiden Stangen 3 verschoben werden, bis das Objektivbajonett 5 im Kamerabajonett 2 sitzt, dann wird der Überwurfring des Kamerabajonetts 2 angezogen.

Damit das Objektiv 4 problemlos an der Kamera angesetzt werden kann, ist folgendes zu beachten: Das Kamerabajonett 2 kann ein toleranzbehafteten Abstand zu den Stangen 3 haben. Deshalb ist es vorteilhaft, dass das Brückenelement 6 in der Höhe und seitwärts zu Objektiv 4 verstellt werden kann. Diese Funktionalität wird durch das Brückenelement abgedeckt. Um aufgrund dieser Toleranzen eine Überbestimmtheit zu vermeiden, sollte das Stützelement 7 ein seitliches Spiel und ein Höhenspiel zu den Stangen 3 haben. Beim Aufsetzen des Objektivs 4 auf Brückenelement 6 und Stützelement 7 steht das Objektiv deshalb leicht schief zur Kamera 1 hingeneigt.. Beim Verschieben des Objektivs 4 über den Stangen gleitet das Objektiv 4. Erst kurz vor Erreichen des Kamerabajonetts 2 wird das Objektiv 4 leicht angehoben und in das Kamerabajonett 2 eingeführt. Selbstverständlich kann die Einrichtung auch derart ausgeführt sein, dass Kamerabajonett 2 und Objektivbajonett 5 genau zueinander ausgerichtet sind, so dass es eines Anhebens/Absenkens oder seitlichen Verschiebens nicht bedarf. Somit steht das Objektiv 4 über das Brückenelement 6 auf den Stangen 3 und ist mit dem Objektivbajonett 5 im Kamerabajonett 2 angeordnet. Das Stützelement 7 hat keine Berührung mehr zu den Stangen 3. Beim Abnehmen des Objektivs 4 von der Kamera 1 wird das Objektiv sofort wieder durch das Stützelement 7 gesichert. Es wird also anstelle der einfachen instabilen Einfachauflage Brückelement auf Stangen eine stabile Zweifachauflage Brückenelement und Stützelement auf Stangen verwendet. Auflageelemente verschiedenster Gestaltung können Verwendung finden. Der Schwerpunkt liegt dabei zwischen den Auflagen, maximal an einer der Auflagen. Eine seitliche Führung des Stützelements 7 an den Stangen 3 kann sich zweckmäßig erweisen. An dem Basiselement können noch weitere Elemente befestigt werden, so z.B. Kompendien. Anstelle eines einzelnen Stützelements könne auch mehrere Stützelemente Verwendung finden.

## Patentansprüche

1. Einrichtung zum Zuführen eines Objektivs (4) zu einer Kamera (1), mit einem Basiselement (3) und einem Brückenelement (6) wobei das Objektiv (4) mittels des Brückenelements (6) am Basiselement (3) in Richtung der Kamera (1) hin und her bewegbar ist
**dadurch gekennzeichnet, dass**
ein Stützelement (7) zwischen Basiselement (3) und Objektiv (4) angeordnet ist. ,

2. Einrichtung nach Anspruch 1, **dadurch gekennzeichnet, dass** das Basiselement (3) mit Verbindungsmitteln, insbesondere mit einem für Basiselement und Kamera (1) gemeinsamen Stativ, oder direkt mit der Kamera (1) verbindbar ist.

3. Einrichtung nach Anspruch 1 oder 2, **dadurch gekennzeichnet, dass** das Basiselement (3) zwei Stangen umfasst.

4. Einrichtung nach einem der vorherigen Ansprüche, **dadurch gekennzeichnet, dass** das Basiselement (3) zumindest eine Schiene umfasst.

5. Einrichtung nach einem der vorhergehenden Ansprüche, **dadurch gekennzeichnet, dass** das Brückenelement (6) und Basiselement (3) komplementär zueinander ausgebildet sind.

6. Einrichtung nach einem der vorhergehenden Ansprüche, **dadurch gekennzeichnet, dass** das Brückenelement (6) lösbar am Objektiv (4) befestigbar ist.

7. Einrichtung nach einem der vorhergehenden Ansprüche, **dadurch gekennzeichnet, dass** das Stützelement (7) lösbar am Objektiv (4) befestigbar ist.

8. Einrichtung nach einem der vorhergehenden Ansprüche, **dadurch gekennzeichnet, dass** das Stützelement (7) verschiebbar am Basiselement (3) gelagert ist.

9. Einrichtung nach einem der vorhergehenden Ansprüche, **dadurch gekennzeichnet, dass** das Objektiv (4) mit der Kamera (1) über einen Verschluss, insbesondere einen Bajonettverschluss (2, 5) verbindbar ist.

10. Einrichtung nach einem der vorhergehenden Ansprüche, **dadurch gekennzeichnet, dass** der Schwerpunkt des Objektivs (4) zwischen Brückenelement (6) und Stützelement (7) liegt.

11. Einrichtung nach einem der vorhergehenden Ansprüche, **dadurch gekennzeichnet, dass** beim Aufliegen des von der Kamera (1) gelösten Objektivs (4) auf Brückenelement (6) und Stützelement (7) die optische Achse des Objektivs (4) um maximal ± 10°, bevorzugt maximal ± 5°, von der optischen Achse der Kamera (1) abweicht.

12. Einrichtung nach Anspruch 11, **dadurch gekennzeichnet, dass** das Objektiv (4) zur Kamera (1) hin geneigt ist.

13. Einrichtung nach einem der vorhergehenden Ansprüche, **dadurch gekennzeichnet, dass** das Objektiv (4) am Brückenelement um maximal ± 10°, bevorzugt ± 5°, verdrehbar und/oder verkippbar angeordnet ist.

14. Einrichtung nach einem der vorhergehenden Ansprüche, **dadurch gekennzeichnet, dass** das Stützelement (7) derart ausgebildet ist, das es nach Verbindung von Kamera (1) und Objektiv (4) im mit der Kamera (1) verbundenen Zustand das Basiselement (3) nicht berührt.

15. Einrichtung nach einem der vorhergehenden Ansprüche, **dadurch gekennzeichnet, dass** das Brückenelement (6) und/oder das Stützelemerit (7) in eine Richtung senkrecht zu einer Längserstreckung des- Basiselements (3) relativ zu diesem Basiselement (3) verlagerbar ist, insbesondere in zwei zueinander senkrechten Richtungen.

16. Einrichtung nach Anspruch 15, **dadurch gekennzeichnet, dass** die Verlagerung maximal 5cm, bevorzugt maximal 2cm beträgt.

17. Vorrichtung zur Aufnahme von Bildern mit einer Kamera (1) und einem Objektiv (4), **dadurch gekennzeichnet, dass**
die Vorrichtung eine Einrichtung nach einem der vorangegangenen Ansprüche umfasst.

18. Vorrichtung nach Anspruch 17, **dadurch gekennzeichnet, dass** die Kamera (1), mit Wechselobjektiven verbindbar ausgebildet ist.
